# EUROPÄISCHE PATENTSCHRIFT

(11) **EP 1 903 048 B1**
(45) Veröffentlichungstag und Bekanntmachung des Hinweises auf die Patenterteilung: **05.11.2008**
(21) Anmeldenummer: 07116105.3
(22) Anmeldetag: 11.09.2007
(51) Int. Cl.: C07F 7/16

(54) **Verfahren zur Herstellung von Methylchlorsilanen**
Process for preparing methylchlorosilanes
Procédé de préparation de méthylchlorosilanes

(30) Priorität: 20.09.2006 DE 102006044372
(43) Veröffentlichungstag der Anmeldung: 26.03.2008
(73) Patentinhaber: Wacker Chemie AG, 81737 München (DE)
(72) Erfinder: KALCHAUER, Wilfried, 84489, Burghausen (DE); GROSS, Jochen, 84577, Tüssling (DE); ZOLLER, Wolfgang, 84561, Mehring (DE)
(74) Vertreter: Deffner-Lehner, Maria

(56) Entgegenhaltungen:
- EP-A- 0 348 902
- EP-A- 0 893 448
- HARRY MORTEN RONG: "Silicon for the Direct Process to Methylchlorosilanes" 1992, NORGES TEKNISKE HOGSKOLE , TRONDHEIM , XP002457969 * Seite 53 *

## Beschreibung

Die Erfindung betrifft ein Verfahren zur Direktsynthese von Methylchlorsilanen unter Verwendung von Chlormethan mit reduziertem Gehalt an Sauerstoff.

Verfahren zur Herstellung von Methylchlorsilanen durch Umsetzung von Silicium mit Chlormethan in der Direktsynthese nach Müller-Rochow in Gegenwart von geeigneten Katalysatoren und Katalysatorkombinationen sind bereits bekannt. Beispielsweise ist das in "Catalyzed Direct Reactions of Silicon; K.M. Lewis, D.G. Rethwisch; Elsevier 1993" Seiten 1 bis 66 beschrieben.

Bei der Direktsynthese von Methylchlorsilanen wird metallisches Silicium mit Chlormethan in Gegenwart von verschiedenen Katalysatoren und gegebenenfalls Promotoren umgesetzt, wobei das Zielprodukt Dimethyldichlorsilan ist. Die Mischung aus Silicium, Katalysatoren und Promotoren wird als Kontaktmasse bezeichnet. Weltweit werden derzeit jährlich über 2000000 Tonnen Dimethyldichlorsilan hergestellt, d.h. kleine Verbesserungen im Herstellungsprozess, wie beispielsweise Erhöhung der Dimethydichlorsilan-Selektivität, Erhöhung der Dimethydichlorsilan spezifischen Raum-/Zeit-Ausbeute oder Erhöhung der spezifischen Siliciumausbeute haben dadurch eine große wirtschaftliche Auswirkung.

In "Silicon for the Direct Process to Methylchlorosilanes; Harry Mortem Rong; Dissertation; Universität Trondheim / Norwegen, Institut für Anorganische Chemie; 1992", ist auf Seite 53 in einer Literaturübersicht der negative Einfluss von Sauerstoff auf die Direktsynthese kurz zusammengefasst. Bereits relativ geringe Mengen an Sauerstoff im Chlormethan reduzieren die Reaktivität der Direktsynthese nachhaltig, bei höheren Sauerstoffmengen wird zusätzlich auch die Selektivität negativ beeinflusst. Auf Seiten 116-117 wird dort im Rahmen von Laborexperimenten der negative Einfluss von Sauerstoff in Bezug auf Reaktivität und Selektivität beschrieben. Als Richtgröße für typische Sauerstoffgehalte im käuflich erhältlichen, reinen Chlormethan werden 10 ppm angegeben.
In "Catalyzed Direct Reactions of Silicon; K.M. Lewis, D.G. Rethwisch; Elsevier 1993", Seiten 10-11 wird als typische Chlormethan-Reinheit für die Direktsynthese 99,5 - 99,8 % angegeben, auf Sauerstoff als Verunreinigung wird dort nicht näher eingegangen.

Dem Fachmann ist bekannt, dass die Abtrennung von Sauerstoff, der beispielsweise in Spuren mit den Rohstoffen eingebracht wird/werden kann, im ppm-Bereich schwierig und kostenintensiv ist.

EP 893448 A beschreibt den Einsatz von Bor in der Kontaktmasse der Direktsynthese zur Erhöhung des Anteils an Dimethyldichlorsilan.

Gegenstand der Erfindung ist ein Verfahren zur Direktsynthese von Methylchlorsilanen durch Umsetzung von Chlormethan mit einer Kontaktmasse, welche Silicium und Kupferkatalysator enthält,
bei dem die Konzentration an Sauerstoff im eingesetzten Chlormethan durch Vermischen von
a) Chlormethan, welches Sauerstoff enthält und
b) Chlormethan, welches eine gasförmig vorliegende Borverbindung enthält,
   reduziert wird.

Überraschender Weise wurde gefunden, dass Kreislauf-Chlormethan (b) ein geeignetes Medium sein kann, um letzte Sauerstoffspuren aus dem frischen Chlormethan (a) zu entfernen. Durch die Entfernung der Sauerstoffspuren wird eine konstant hohe Reaktivität und /oder Selektivität der Methylchlorsilansynthese sichergestellt.

Aus Sauerstoff aus dem Chlormethan (a) werden höhersiedende oder feste Verbindungen gebildet, die keinen stark negativen Effekt mehr auf die Direktsynthese ausüben. Diese gebildeten Verbindungen können bei Bedarf auch leicht vom Gasstrom abgetrennt werden können.

Das Verfahren zur Herstellung von Methylchlorsilanen kann diskontinuierlich oder kontinuierlich durchgeführt werden, in der industriellen Produktion wird nur die kontinuierliche Ausführungsform angewendet. Kontinuierlich bedeutet, dass die Menge an abreagiertem Silicium und mit dem Reaktionsstaub ausgetragenen Katalysatoren und gegebenenfalls Promotoren laufend nachdosiert werden, vorzugsweise als vorgemischte Kontaktmasse. Die kontinuierliche Direktsynthese wird bevorzugt in Wirbelschichtreaktoren durchgeführt, in denen Chlormethan gleichzeitig als Fluidisierungsmedium und Reaktant eingesetzt wird.

Das benötigte Silicium wird üblicherweise zuvor zu einem Pulver vermahlen und mit Kupferkatalysator und Promotoren zur Kontaktmasse vermischt. Vorzugsweise wird Silicium in einer Korngröße von höchstens 700 µm, besonders bevorzugt in einer Korngröße höchstens 600µm insbesondere höchstens 500µm eingesetzt. Das eingesetzte Silicium weist üblicherweise einen Reinheitsgrad von > 98% auf.

Eine Produktionskampagne der kontinuierlichen Direktsynthese wird mit der Induktionsphase begonnen. Mit Beginn der Induktionsphase wird Methylchlorid in die erhitzte Kontaktmasse geleitet. Darauf folgt die Startphase, in welcher die Rohsilanbildung einsetzt. Die Reaktion läuft vorerst mit geringer Selektivität und Reaktivität ab. Anschließend wird die stabile Produktionsphase erreicht. Kontaktmasse wird laufend nachdosiert. Die Produktionskampagne endet, wenn kein Chlormethan mehr in die Kontaktmasse eingeleitet wird.

Beim kontinuierlichen Betrieb eines Reaktors fallen in einer Produktionskampagne nach einer weitgehend stabilen Produktionsphase die Produktionsraten bezogen auf das Zielprodukt Dimethyldichlorsilan ab. Deshalb muss die Produktionskampagne nach einer bestimmten Zeit beendet werden. Eine Produktionskampagne dauert meist nur einige Tage bis mehrere Wochen. Der Reaktor wird nach Beendigung einer Produktionskampagne entleert, neu mit Kontaktmasse befüllt und wieder auf Reaktionsbedingungen gebracht.

Bei der Direktsynthese verlassen nicht umgesetztes Chlormethan, die gasförmigen Methylchlorsilane und gegebenenfalls mitgerissene Partikel den Reaktor. Die mitgerissenen Partikel bestehen aus abreagierten Siliciumkörnen, feinen Siliciumkörnern, Katalysatoren und Promotoren/Co-Katalysatoren. Über einen oder mehrere Cyclone kann man, falls erwünscht, die mitgerissenen Partikel vom Gasstrom abtrennen, wobei große mitgerissene Partikel aus der Kontaktmasse wieder in den Reaktor zurückgeführt werden können. Das Silan wird anschließend von restlichen Staubanteilen und nicht umgesetztem Chlormethan abgetrennt und einer Destillation zugeführt.

Das Verfahren wird bevorzugt in einem Wirbelschichtreaktor, vorzugsweise im Temperaturbereich von 250 bis 400°C, besonders bevorzugt bei 250 bis 360°C, insbesondere bei 280 bis 330°C durchgeführt. Weil dies den geringsten Aufwand erfordert, wird das Verfahren meist beim Druck der umgebenden Atmosphäre, also bei etwa 0,1 MPa bis 0,5 MPa durchgeführt, es können aber auch höhere Drücke angewandt werden.

Die Menge des Gasstromes wird in einer bevorzugten Ausführungsform so gewählt, dass im Reaktor eine Wirbelschicht aus Kontaktmasse und Gas gebildet wird. Nicht umgesetztes Chlormethan und die gasförmigen Methylchlorsilane verlassen den Reaktor. Die Zubereitung der Kontaktmasse erfolgt durch einfaches Mischen der Einzelkomponenten bei Raumtemperatur. Eine Behandlung der Kontaktmasse vor dem Einbringen in den Reaktor ist möglich, wird aber in der bevorzugten Ausführungsform nicht durchgeführt.

Beim erfindungsgemäßen Verfahren wird die Form des Kupfers vorzugsweise ausgewählt aus metallischem Kupfer, Kupferlegierungen, Kupferoxid und Kupferchlorid. Kupferoxid kann beispielsweise Kupfer in Form von Kupferoxid-Gemischen und in Form von Kupfer(II)oxid sein. Kupferchlorid kann in Form von CuCl oder in Form von CuCl₂ eingesetzt werden, wobei auch entsprechende Mischungen möglich sind.

Vorzugsweise werden 0,3 bis 10 Gew.%, insbesondere 0,5 bis 7 Gew.% Kupfer in der Kontaktmasse verwendet, besonders bevorzugt sind 0,5 bis 4,5 Gew.%.

Beim erfindungsgemäßen Verfahren können Promotoren in der Kontaktmasse eingesetzt werden, die vorzugsweise ausgewählt werden aus Zink, Phosphor, Zinn und Antimon.

Zink wird vorzugsweise in Form von metallischem Zink, auch als Legierung mit Kupfer und gegebenenfalls weiteren Promotoren, Zinkoxid, oder Zinkchlorid eingesetzt. Die Menge an eingesetztem Zink in der Kontaktmasse beträgt vorzugsweise 0,001 - 1,0 Gew.-% insbesondere 0,010 - 0,50 Gew.-%.

Der Zinngehalt in der Kontaktmasse beträgt vorzugsweise 5 bis 100 ppm, besonders bevorzugt 10 bis 80 ppm, insbesondere 15 bis 60 ppm.

Das Chlormethan (a) ist vorzugsweise frisch hergestelltes Chlormethan, kurz "frisch Chlormethan". Der Sauerstoffgehalt im frisch Chlormethan ist vorzugsweise so gering wie möglich, ohne dass jedoch zusätzlich teure Reinigungsschritte zur Anwendung kommen.

Obwohl die Chlormethan-Synthese unter inerten Bedingungen durchgeführt wird, enthält großtechnisch hergestelltes Chlormethan (a), bedingt durch die eingesetzten Rohstoffe, so keine spezielle Sauerstoffentfernung zur Anwendung kommt, etwa 10 bis 50 Vol.-ppm Sauerstoff.

Dem Fachmann ist bekannt, dass flüchtige Borverbindungen, wie niedrige Borane, beispielsweise B₂H₆, und Organoborane, beispielsweise Me₃B, sehr heftig mit Sauerstoff reagieren. Borhalogenide, wie beispielsweise BCl₃, und Borane reagieren auch mit Wasser sehr heftig. In allen Fällen bilden sich höhersiedende B-O Strukturen aus. Die Eigenschaften der Borhalogenide, Borane und Organoborane sind beispielsweise in "Ullmann"s Encyclopedia of Industrial Chemistry (on CD-ROM); Release 2006, 7th Edition" beschrieben.

Beim erfindungsgemäßen Verfahren werden bevorzugt flüchtige Borverbindungen mit einem Siedepunkt von kleiner +15°C, besonders bevorzugt sind Verbindungen mit einem Siedepunkt im Bereich -40°C bis -15°C, im Chlormethan (b) eingesetzt. Insbesondere kommt Me₃B zum Einsatz.

Die Konzentration der flüchtigen Borverbindung im Chlormethan (b) beträgt beim erfindungsgemäßen Verfahren mindestens 50 Vol.-ppm, bevorzugt sind mindestens 100 Vol.-ppm, besonders bevorzugt sind mindestens 200 Vol.-ppm.

Die flüchtigen Borverbindungen können bei der Direktsynthese beispielsweise aus dem in den eingesetzten Rohstoffen enthaltenen Bor oder Borverbindungen, durch entsprechende Reaktionsführung, gebildet und zumindest teilweise im Chlormethan (b) belassen werden.
Flüchtige Borverbindungen können dem Chlormethan (b) aber auch zugesetzt werden.

Chlormethan (a) aus der Umsetzung vom Methanol mit HCl enthält nach der in "Ullmann"s Encyclopedia of Industrial Chemistry (on CD-ROM); Release 2006, 7th Edition" beschriebenen Trocknung mit konzentrierter Schwefelsäure in Abhängigkeit von den gewählten Prozessparametern im Regelfall 5 bis 60 Vol.-ppm H₂O.

In "Silicon for the Direct Process to Methylchlorosilanes; Harry Mortem Rong; Dissertation; Universität Trondheim / Norwegen, Institut für Anorganische Chemie; 1992", ist auf Seite 53 in einer Literaturübersicht der negative Einfluss von Feuchtigkeit im Chlormethan kurz zusammengefasst. Es wird aufgezeigt, dass Wasser mit den Methylchlorsilanen hochsiedende Verbindungen bildet, die zu unerwünschten Ablagerungen im Reaktionssystem führen können, und dass Wasser/Feuchtigkeit mit den reaktiven Stellen am Siliciumkorn reagiert und dies führt letztendlich zu einer Verringerung der Reaktivität.

In einer bevorzugten Ausführungsform der Erfindung enthält das Chlormethan (b) Methylchlormonosilane. Methylchlormonosilane reagieren mit Wasser unter der Ausbildung von höhersiedenen Si-O-Si Verbindungen und HCl.

Die Methylchlormonosilane sind vorzugsweise Verbindungen der allgemeinen Formel Hₓ(CH₃)_{y}SiCl_{z}, mit der Maßgabe, dass x+y+z = 4; z = 1, 2 oder 3 und y = 1, 2 oder 3.
Vorzugsweise enthält das Chlormethan (b) pro m³ bei 0,10 MPa und 20°C mindestens 5 mg Methylchlormonosilane, besonders bevorzugt mindestens 10 mg Methylchlormonosilane, insbesondere mindestens 30 mg Methylchlormonosilane.

Aus dem nach der Direktsynthese den Reaktor verlassenden Produktgemisch werden die gebildeten Methylchlorsilane, beispielsweise durch Kondensation, abgetrennt. Das verbleibende Gasgemisch enthält nicht abreagiertes Chlormethan und zusätzlich unterschiedliche Mengen an Inertgasen, wie beispielsweise Stickstoff, gesättigte Kohlenwasserstoffe, wie beispielsweise Methan, Ethan, Propan und iso-Butan, ungesättigte Kohlenwasserstoffe, wie beispielsweise Ethen und Propen und Wasserstoff. In Abhängigkeit von der Methode und den Bedingungen der Methylchlorsilan-Abtrennung kann das verbleibende Gasgemisch auch flüchtige Borverbindungen und Reste an Methylchlorsilanen enthalten. Dieses Gasgemisch kann, falls erwünscht ganz oder teilweise weiter aufgereinigt werden, um die Konzentration an Chlormethan zu steigern und somit eine höhere Reaktivität in der Direktsynthese zu bewirken. Geeignete Aufreinigungsmethoden sind beispielsweise, Kondensation des Chlormethan und Entfernung der restlichen gasförmigen Bestandteile, oder verschieden Formen der Destillation, oder gezielte Ab- oder Adsorption.

In einer bevorzugten Ausführungsform des Verfahrens werden die Methylchlorsilanabtrennung und die gegebenenfalls stattfindende nachfolgende Reinigung des vorwiegend Chlormethan enthaltenden Gasgemisches derart betrieben, dass die darin enthaltenen flüchtigen Borverbindungen und gegebenenfalls Methylchlormonosilane nicht vollständig entfernt werden. Das Gasgemisch wird so vorzugsweise als Chlormethan (b) eingesetzt.

Das Mischungsverhältnis Chlormethan (a) : Chlormethan (b) richtet sich hauptsächlich nach den Umsatzraten der Direktsynthese und liegt im Regelfall im Bereich bei 20 : 80 bis 80 : 20. Es können aber auch davon abweichende Verhältnisse eingestellt werden. Das Vermischen von Chlormethan (a) mit Chlormethan (b) erfolgt vorzugsweise vor dem Direktsynthesereaktor und soll möglichst innig sein. Temperatur und Druck beim Vermischen der beiden Produktströme sowie Verweilzeit vor dem Einbringen in den Direktsynthese-Reaktor sind von untergeordneter Bedeutung.

Die Reaktionsprodukte aus den Borverbindungen mit Sauerstoff und gegebenenfalls Methylchlormonosilanen mit Wasser sind bei 0,10 MPa und 20°C flüssig oder fest und können, falls erwünscht, vor dem Einspeisen in den Reaktor der Direktsynthese ganz oder teilweise vom Chlormethan-Gemisch abgetrennt werden. Dies kann beispielsweise erfolgen durch Filtration, Destillation oder Kondensation. Eine Abtrennung dieser Verbindungen ist beim erfindungsgemäßen Verfahren jedoch nicht unbedingt erforderlich, da die Reaktionsprodukte in der Direktsynthese eine viel geringere, schädliche Wirkung aufweisen als Sauerstoff oder Wasser.

Im nachfolgenden Beispiel sind, falls nicht anders angegeben,
a) alle Mengen auf die Masse bezogen;
b) alle Drücke 0,10 MPa (abs.);
c) alle Temperaturen 20°C.

### Beispiel:

### Analytik

Leichtsiedende Bor-Verbindungen wie z.B. Trimethylboran in Chlormethan lassen sich gaschromatographisch bestimmen. Die Probenaufgabe erfolgt vorzugsweise mittels Dosierschleife. Beim Probenhandling ist auf Ausschluss von Sauerstoff und / oder Feuchtigkeit in den Probengefäßen, Probenleitungen, Dosiersystemen und der Gasversorgung zu achten. Die Trennung erfolgt mittels Kapillartrennsäule, beispielsweise mit einer 50 m Säule, belegt mit Dimethylpolysiloxanphase, 0,2 mm Innendurchmesser, 0,5 µm Filmdicke bei 35 °C. Die Detektion erfolgt über einen spezifischen Detektor wie z.B. ein handelsübliches Quadrupol Massenspektrometer, Damit sind Nachweisgrenzen realisierbar von 10 Vol.-ppm, in günstigen Fällen sind auch noch geringere Nachweisgrenzen möglich. Bei Dotierung der Trimethylboran haltigen Chlormethan Probe mit Sauerstoff lässt sich mit dem oben beschriebenen GC-MS System Trimethylboroxin und andere Bor-Sauerstoffverbindungen nachweisen. Molekularer Sauerstoff lässt sich erst dann nachweisen, wenn die vorhandenen reaktiven Bor-Verbindungen vollständig abreagiert sind. Mit diesem GC/MS System kann auch die Bestimmung von Sauerstoff in Chlormethan durchgeführt. Eine Nachweisgrenze von 2 Vol.-ppm ist realisierbar. Der Sauerstoff Blindwert des Verfahrens ist hierbei genau zu kontrollieren.

### Durchführung (erfindungsgemäß):

In einem großtechnischen Wirbelschichtreaktorsystem zur Herstellung von Methylchlorsilanen, wie es in Handbook of Heterogeneous Catalysis; Edited by G. Ertl, H. Knörzinger, J. Weitkamp, VCH Verlagsgesellschaft mbH, Weinheim, 1997; Volume 4 "The Direct Process to Methylchlorosilanes (Müller-Rochow Synthesis)", B. Pachaly, Seite 1791-1793 und Abbildung 1 beschrieben ist, wurden Methylchlorsilanabtrennung und Kreisgasreinigung so betrieben, dass im Kreislauf-Chlormethan 300 Vol.-ppm Trimethlyboran und 49 mg Chlormonosilane pro m³ bei 0,10 MPa und 20°C enthalten blieben. Die Methylchlorsilane waren ein Gemisch aus Dimethylchlorsilan, Methyldichlorsilan, Methyltrichlorsilan, Dimethyldichlorsilan und Trimethylchlorsilan.
Das eingesetzte frische Chlormethan enthielt 30 Vol.-ppm Sauerstoff und 20 Vol.-ppm Wasser. Kreislauf- Chlormethan und frisches Chlormethan wurden im Verhältnis 60:40 innig vermischt, durch einen Gasfilter geleitet und in den Wirbelschichtreaktor eingebracht. Im Gasfilter schied sich ein heller Feststoff mit folgender Zusammensetzung ab: 44,0 Gew.% Silicium; 7,4 Gew.% Chlor; 17,4 Gew.% Kohlenstoff; 25,3 Gew.% Sauerstoff; 5,1 Gew.% Wasserstoff; 0,2 Gew.% Bor. Im Gasgemisch nach dem Gasfilter lagen der Sauerstoff- und Wassergehalt unter der Nachweisgrenze. Somit ist der Nachweis erbracht, dass durch Borverbindungen und gegebenenfalls Methylchlorsilane im Kreislauf-Chlormethan Sauerstoff und gegebenenfalls Feuchtigkeit aus dem frischen Chlormethan entfernt werden.

## Patentansprüche

1. Verfahren zur Direktsynthese von Methylchlorsilanen durch Umsetzung von Chlormethan mit einer Kontaktmasse, welche Silicium und Kupferkatalysator enthält, bei dem die Konzentration an Sauerstoff im eingesetzten Chlormethan durch Vermischen von
a) Chlormethan, welches Sauerstoff enthält und
b) Chlormethan, welches eine gasförmig vorliegende Borverbindung enthält, reduziert wird.

2. Verfahren nach Anspruch 1, welches kontinuierlich durchgeführt wird.

3. Verfahren nach Anspruch 1 und 2, bei dem nach der Direktsynthese aus dem das den Reaktor verlassenden Produktgemisch die darin enthaltenen flüchtigen Borverbindungen nicht vollständig entfernt werden und das resultierende vorwiegend Chlormethan enthaltende Gasgemisch als Chlormethan (b) eingesetzt wird.

4. Verfahren nach Anspruch 1 bis 3, bei dem das Mischungsverhältnis Chlormethan (a) : Chlormethan (b) 20 : 80 bis 80 : 20 beträgt.

5. Verfahren nach Anspruch 1 bis 4, bei dem die Konzentration an flüchtigen Borverbindung im Chlormethan (b) mindestens 50 Vol.-ppm beträgt.

6. Verfahren nach Anspruch 1 bis 5, bei dem das Chlormethan (b) zusätzlich Methylchlormonosilane enthält.

7. Verfahren nach Anspruch 6, bei dem das Chlormethan (b) pro m³ bei 0,10 MPa und 20°C mindestens 5 mg Methylchlormonosilane enthält.

8. Verfahren nach Anspruch 6 und 7, bei dem nach der Direktsynthese aus dem das den Reaktor verlassenden Produktgemisch die darin enthaltenen Methylchlormonosilane nicht vollständig entfernt werden.

## Claims

1. Process for the direct synthesis of methylchlorosilanes by reaction of chloromethane with a contact composition comprising silicon and copper catalyst,
wherein the concentration of oxygen in the chloromethane used is reduced by mixing of
a) chloromethane which contains oxygen and
b) chloromethane which contains a gaseous boron compound.

2. Process according to Claim 1 which is carried out continuously.

3. Process according to Claim 1 or 2, wherein the volatile boron compounds present in the product mixture leaving the reactor after the direct synthesis are not removed completely and the resulting gas mixture comprising predominantly chloromethane is used as chloromethane (b).

4. Process according to any of Claims 1 to 3, wherein the mixing ratio of chloromethane (a) : chloromethane (b) is from 20:80 to 80:20.

5. Process according to any of Claims 1 to 4, wherein the concentration of volatile boron compound in the chloromethane (b) is at least 50 ppm by volume.

6. Process according to any of Claims 1 to 5, wherein the chloromethane (b) additionally contains methylchloromonosilanes.

7. Process according to Claim 6, wherein the chloromethane (b) contains at least 5 mg of methylchloromonosilanes per m³ at 0.10 MPa and 20°C.

8. Process according to Claim 6 or 7, wherein the methylchloromonosilanes present in the product mixture leaving the reactor after the direct synthesis are not removed completely.

## Revendications

1. Procédé en vue de la synthèse directe de méthylchlorosilanes par réaction de chlorométhane avec une masse de contact, qui contient du silicium et un catalyseur au cuivre, dans lequel on réduit la concentration de l'oxygène dans le chlorométhane utilisé par mélange
a) du chlorométhane qui contient de l'oxygène et
b) du chlorométhane qui contient un composé du bore présent sous forme gazeuse.

2. Procédé selon la revendication 1 qui est effectué en mode continu.

3. Procédé selon la revendication 1 ou 2, dans lequel les composés du bore volatils qui sont contenus dans le mélange de produits quittant le réacteur après la synthèse directe ne sont pas conplètement éliminés et dans lequel on utilise le mélange gazeux résultant contenant pour l'essentiel du chlorométhane en tant que chlorométhane (b).

4. Procédé selon la revendication 1 à 3, dans lequel le rapport de mélange chlorométhane (a) : chlorométhane (b) est de 20 : 80 à 80 :20.

5. Procédé selon la revendication 1 à 4, dans lequel la concentration en composé du bore volatil dans le chlorométhane (b) est d'au moins 50 ppm en volume.

6. Procédé selon la revendication 1 à 5, dans lequel le chlorométhane (b) contient en outre du méthylchloromonosilane.

7. Procédé selon la revendication 6, dans lequel le chlorométhane (b) contient, à 0,10 MPa et 20 °C, au moins 5 mg de méthylchloromonosilane par m³.

8. Procédé selon la revendication 6 et 7, dans lequel les méthylchlorosilanes qui sont contenus dans le mélange de produits quittant le réacteur après la synthèse directe ne sont pas conplètement éliminés.
